# DEMANDE DE BREVET EUROPEEN

(11) **EP 1 700 739 A1**
(43) Date de publication de la demande: **13.09.2006**
(21) Numéro de dépôt: 06290399.2
(22) Date de dépôt: 09.03.2006
(51) Int. Cl.: B60N 2/30

(54) **Agencement de siège escamotable**

(30) Priorité: 10.03.2005 FR 0550625
(71) Demandeur: PEUGEOT CITROËN AUTOMOBILES S.A., 78140 Velizy Villacoublay (FR)
(72) Inventeur: Luigi, Marc, 93460 Gournay Sur Marne (FR)
(74) Mandataire: Fernandez, Francis Lionel

(57) **Abrégé**

Agencement de siège escamotable de véhicule automobile comprenant un siège (1), avec un dossier (4) et une assise (3), et un réhaut (2) monté sur un premier niveau de plancher (10) et dont la surface portante (6) supérieure supporte le siège (1), ladite surface portante (6) étant sensiblement dans le plan d'un second niveau de plancher (11) plus élevé que ledit premier niveau de plancher (10).

Le siège comprend un premier pivot (R1), situé à l'extrémité de l'assise (3) opposée au dossier (4), pour faire pivoter le siège (1) dans son ensemble jusqu'à amener le dos (5) de l'assise sensiblement dans le plan de la surface portante (6) du réhaut (2), et un second pivot (R2), situé sensiblement à l'intersection de l'assise (3) et du dossier (4), pour faire pivoter, simultanément avec la rotation du siège sur ledit premier pivot (R1), le dossier (4) par rapport à l'assise (3) afin d'amener le dos (7) du dossier (4) dans un plan sensiblement orthogonal à l'assise.

Application aux sièges et banquettes de véhicules automobiles.

## Description

La présente invention concerne un agencement de siège escamotable de véhicule automobile, susceptible d'être transformé en plancher de chargement.

Les véhicules automobiles sont couramment équipés de sièges arrière ou de banquettes arrière, qui peuvent être déverrouillés de leur position de route afin de rabattre leur dossier vers l'avant, de manière à offrir un plus grand espace de charge à l'arrière du véhicule. De cette façon, le plan de chargement du coffre, par exemple, est augmenté d'une distance correspondant sensiblement à la hauteur du dossier rabattu.

Toutefois, de tels agencements de sièges ou banquettes escamotables présentent l'inconvénient de na pas offrir, en position rabattue, un plan de charge continu et plan ; le plus souvent, il existe entre le dossier rabattu et le plancher du coffre, par exemple, une discontinuité du plan due aux courbures des bords respectifs du dossier et du plan du coffre. Au cours du chargement du véhicule, cette discontinuité peut être la cause de chocs, d'accrochages, de difficultés de placement des objets ou bagages chargés.

Un autre inconvénient réside dans le fait que, dans une telle disposition de dossiers rabattus, c'est, le plus souvent, le dos du dossier avant qui sert de plan d'arrêt de charge aux objets et bagages chargés. En cas de brusques manoeuvres de freinage ou d'accident, par exemple, les objets et bagages chargés peuvent être projetés vers l'avant et, par conséquent, frapper le dossier du conducteur et/ou du passager avant et porter atteinte à la qualité de la conduite, voir provoquer des blessures. Même en l'absence de brusques manoeuvres ou d'accident, les bagages et autres objets peuvent brusquement glisser et entraîner des risques similaires, surtout s'il s'agit d'objets lourds, ou dont la charge est mal répartie ou qui sont mal attachés.

Le but de la présente invention est d'obvier à ces inconvénients, et d'offrir la possibilité d'un plan de chargement le plus grand possible, en réalisant un nouvel agencement de siège escamotable de véhicule automobile.

C'est également un but de la présente invention de réaliser un agencement de siège escamotable avec un mécanisme qui permette le passage d'une position assise ou de route à une position de charge en une seule opération combinant plusieurs mouvements de rotation simultanés.

C'est encore un but de la présente invention de réaliser un agencement de siège escamotable avec un mécanisme qui n'affecte pas la qualité et le confort de l'assise et du dossier.

Pour atteindre ces buts, le nouvel agencement de siège comprend un siège, avec un dossier et une assise, et un support ou réhaut monté sur un premier niveau de plancher et dont la surface portante supérieure supporte le siège, ladite surface portante étant sensiblement dans le plan d'un second niveau de plancher plus élevé que ledit premier niveau de plancher, caractérisé en ce que ledit siège comprend, de plus, un premier pivot, situé à l'extrémité de l'assise opposée au dossier, pour faire pivoter ledit siège dans son ensemble de manière à amener le dos de l'assise sensiblement dans le plan de la surface portante du réhaut, et un second pivot, situé sensiblement à l'intersection de l'assise et du dossier, pour faire pivoter, simultanément avec la rotation du siège sur ledit premier pivot, ledit dossier par rapport à ladite assise afin d'amener le dos dudit dossier dans un plan sensiblement orthogonal à l'assise.

De manière préférentielle, le réhaut est monté coulissant sur ledit premier niveau de plancher selon la direction longitudinale du véhicule automobile.

Selon le mode préféré de réalisation de l'invention, le réhaut peut venir en butée contre une planche à talon séparant les deux niveaux de plancher, de manière que la surface portante dudit réhaut soit, dans ladite position de butée, coplanaire et contiguë au second niveau de plancher.

Egalement selon le mode préféré de réalisation de l'invention, l'axe du premier pivot est situé sensiblement dans le plan de ladite surface portante du réhaut à l'extrémité avant dudit réhaut.

De préférence, l'assise présente une épaisseur maximale sensiblement égale à la différence de niveau entre les deux niveaux de plancher dans au moins une partie proche du second pivot.

De préférence également, il est prévu un moyen de blocage du mouvement de rotation du dossier autour de l'axe du second pivot, pour immobiliser le dossier en position telle que le dos dudit dossier soit, dans la position résultante de l'escamotage, dans un plan sensiblement orthogonal à ladite surface portante du réhaut.

Selon le mode préféré de réalisation de l'invention, la surface de la planche à talon, contre laquelle vient en butée le réhaut, est située dans un plan qui fait un angle (α) compris entre 45° et 90° avec les plans des deux niveaux de plancher.

De manière préférentielle, le réhaut est monté coulissant selon la direction longitudinale du véhicule sur le premier niveau de plancher au moyen de glissières fixées sur ledit premier niveau de plancher.

Selon la présente invention, l'expression « agencement de siège» désigne aussi bien un siège arrière, ou plusieurs sièges arrière d'une même rangée ou une rangée de sièges arrière , ou encore une banquette arrière. Le terme « arrière » dans les expressions « siège arrière », « banquette arrière » désigne le siège, ou la rangée de sièges, ou la banquette, de deuxième rang ou plus, selon l'aménagement de l'habitacle. L'invention s'applique mutatis mutandis à un siège, une rangée de sièges ou à plusieurs sièges d'une même rangée ou encore à une banquette, de deuxième rang ou plus. Elle peut même s'appliquer au siège passager du premier rang, qui n'est pas le siège du conducteur.

D'autres avantages et caractéristiques apparaîtront dans la description qui suit d'un exemple de réalisation de la présente invention, non limitatif de l'objet de l'invention, accompagné de dessins dans lesquels :
- La figure 1 est une représentation schématique illustrant la position d'origine du siège escamotable dans l'habitacle d'un véhicule automobile,
- La figure 2 est une représentation schématique illustrant le mouvement de translation du siège escamotable de la figure 1, avant escamotage selon la présente invention,
- La figure 3 est une représentation schématique illustrant la cinématique de l'escamotage du siège, selon la présente invention,
- La figure 4 est une représentation schématique illustrant la position en charge du siège, c'est-à-dire la position résultante de l'escamotage,

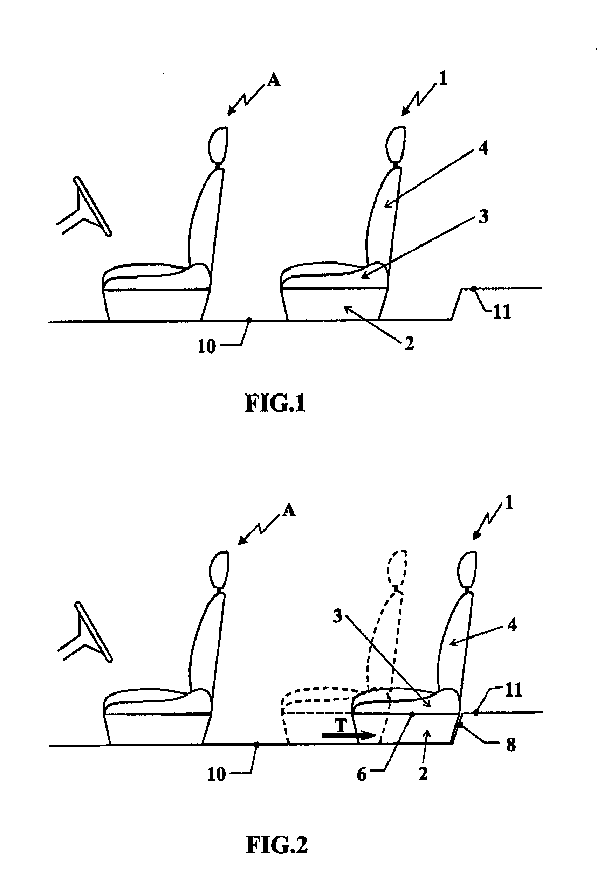

Sur le dessin de la figure 1, on a représenté très schématiquement un agencement de sièges dans l'habitacle d'un véhicule automobile, avec une première rangée de sièges, représentée schématiquement par un siège, et référencée A, comprenant le siège du conducteur, et une seconde rangée de sièges, illustrée par un siège de référence générale 1. Le siège est monté sur un support de siège ou réhaut 2, lequel est monté coulissant dans la direction longitudinale du véhicule sur un plancher 10. Le plancher de l'habitacle est un plancher à deux niveaux : le niveau du plancher 10 ou premier niveau, et un second niveau de plancher 11, à l'arrière du siège 1, qui peut correspondre au niveau du plancher du coffre ou à une section de plancher arrière supportant d'autres sièges.

Le réhaut 2 peut coulisser sur le plancher 10 au moyen de glissières (non représentées) ou de tout autre moyen, connu de l'art antérieur, permettant de guider son déplacement en translation linéaire d'avant en arrière (flèche T sur le dessin de la figure 2) et d'arrière en avant, selon la direction longitudinale du véhicule. Sur le dessin de la figure 2, on a représenté le siège 1 en position translatée, de telle manière que le réhaut 2 vienne en butée contre la planche à talon 8 qui sépare les deux niveaux, 10 et 11, du plancher à deux niveaux. Des moyens de verrouillage, connus en soi, non représentés, sont prévus pour immobiliser le réhaut, et par conséquent le siège 1, dans cette position en butée, représentée sur le dessin de la figure 2.

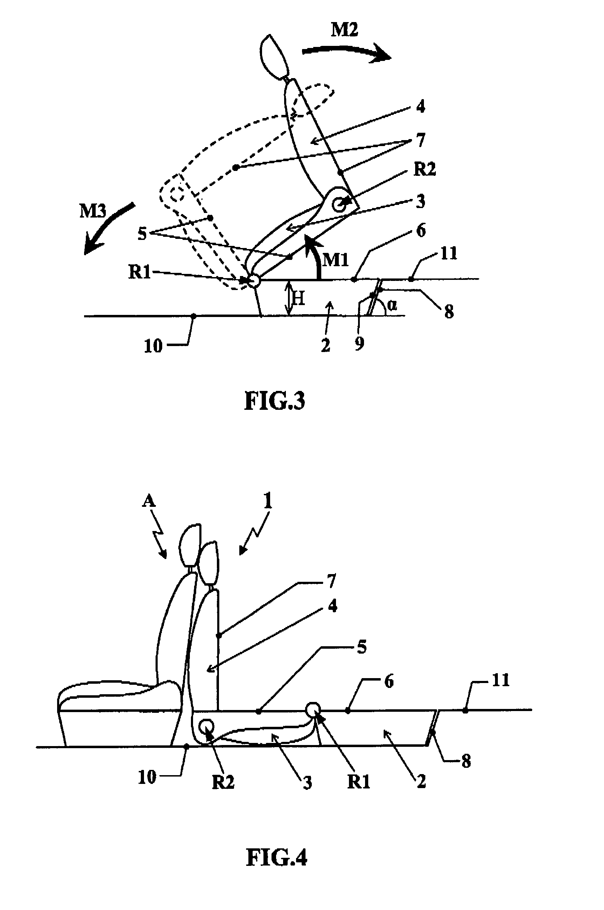

Le siège est typiquement constitué d'une assise 3 et d'un dossier 4, avec ou sans appuie-tête. Il repose par sa base sur la face supérieure du réhaut 2, désignée surface portante du réhaut et référencée 6. Il est prévu un moyen de blocage, connu en soi, et non représenté, du siège sur la surface portante 6. En se référant aux dessins des figures 3 et 4, le dossier 4 est relié à l'assise 3 au moyen d'un pivot, référencé R2, permettant un déplacement angulaire relatif du dossier par rapport à l'assise de grande amplitude, supérieure ou égale à 180°, Il est également prévu des moyens, connus en soi, non représentés, notamment des éléments de commande et de réglage de la position du dossier par rapport à l'assise et, en particulier, selon la présente invention, un moyen de blocage sur le pivot R2 dans la position dite position de charge, illustrée sur le dessin de la figure 4, selon laquelle le dossier est sensiblement perpendiculaire à l'assise, mais avec la surface arrière 7 du dossier en regard de la surface de dos 5 de l'assise.

Le réhaut 2 peut être de forme et conception variées, pour autant qu'il offre une surface portante 6 du siège, une hauteur déterminée H (voir le dessin de la figure 3) et un moyen d'appui en butée contre la planche à talon 8. La hauteur est égale à la différence de niveau entre les deux niveaux de plancher 10 et 11, pour les raisons exposées ci-après. En se référant plus particulièrement au dessin de la figure 3, le moyen d'appui en butée contre la planche à talon 8 est, dans l'exemple de réalisation ici décrit, une conformation de sa surface arrière plane 9 ou d'éléments de butée situés dans un plan d'inclinaison α par rapport aux plans des deux niveaux de plancher, 10 et 11, de manière à s'appliquer sur la planche à talon d'angle égal a. Cet angle α est, de préférence, compris entre 45° et 90°.

En se référant au dessin de la figure 3, on va exposer les mouvements constitutifs de l'escamotage du siège selon la présente invention. Le siège 1 étant en position en butée contre la planche à talon 8, l'ensemble du siège 1 est mis en rotation sur le pivot référencé R1 (mouvement représenté par la flèche M1), et se trouve alors détaché angulairement de la surface portante 6 du réhaut, comme on peut le voir sur le dessin en traits pleins et continus de la figure 3, qui illustre le début de l'opération d'escamotage. Puis on libère le blocage du dossier sur le pivot R2, en faisant pivoter vers l'arrière le dossier 4 par rapport à l'assise 3 (mouvement représenté par la flèche M2) tout en continuant la rotation de l'ensemble du siège 1 sur le pivot R1. En faisant pivoter vers l'arrière le dossier 4 par rapport à l'assise 3 (mouvement représenté par la flèche M2) selon un angle sensiblement égal à 180°, le dossier 4 se bloque à 90° par rapport au dos de l'assise 5. Sur le dessin de la figure 3, est représentée en traits interrompus courts la position du siège 1 à ce stade intermédiaire en cours d'opération d'escamotage, avant que celle-ci ne soit terminée. Dans cette position illustrée en traits interrompus courts, le mouvement sur le pivot R2 est achevé. Son dossier ainsi bloqué en rotation par rapport à l'assise, on laisse l'ensemble du siège en rotation sur le pivot R1 (mouvement représenté par la flèche M3) jusqu'à ce que l'ensemble du siège se dépose et vienne en appui sur le plancher 10.

Le siège escamoté se trouve alors dans la position dite position en charge, représentée sur le dessin de la figure 4. L'ensemble résultant des mouvements précédemment décrits fait apparaître un plancher de charge plat continu formé successivement d'avant en arrière par la surface du dos 5 de l'assise 3, la surface portante 6 du réhaut 2 et le second niveau ou niveau supérieur de plancher 11. De plus, l'ensemble résultant fait apparaître la surface arrière 7 du dossier 4 faisant office d'arrêt de charge, empêchant ainsi un contact direct d'objets de chargement avec les sièges de la première rangée, illustrée par la référence A.

Les surfaces arrière 7 du dossier et de dos 5 de l'assise, ainsi que la surface portante du réhaut 6 sont des surfaces dures, rigides appropriées à constituer un plancher et, en ce qui concerne la surface arrière 7 du dossier à former une surface robuste de façon à arrêter des charges susceptibles de venir cogner vers l'avant de l'habitacle, et à amortir des heurts éventuels sur l'arrière des sièges de la première rangée, en particulier le siège du conducteur.

Bien que la description ci-dessus d'un exemple de réalisation concerne un seul siège, on comprendra aisément que le principe et les moyens de la présente invention peuvent être répétés et associés à plusieurs sièges. Le même agencement de siège peut être étendu à tous les sièges de la deuxième rangée de sièges, située derrière le conducteur, ou à une ou plusieurs autres rangées de sièges situées derrière le conducteur. On peut également appliquer la présente invention à une rangée intermédiaire de sièges, par exemple la deuxième rangée alors qu'il y a une troisième rangée derrière la seconde rangée, ce qui a pour résultat d'augmenter la surface du plancher entre la deuxième et la troisième rangée et de créer ainsi un plancher de chargement intermédiaire ou un espace libre intermédiaire. On peut même appliquer le principe et les moyens de la présente invention au siège avant ou aux sièges avant passager, à l'exclusion évidemment du siège conducteur.

Enfin, la présente invention s'applique pareillement si l'on substitue une banquette à plusieurs sièges ou à tous les sièges d'une même rangée de sièges, située au deuxième rang ou plus.

## Revendications

1. Agencement de siège escamotable de véhicule automobile, comprenant un siège (1), avec un dossier (4) et une assise (3), et un réhaut (2) monté sur un premier niveau de plancher (10) et dont la surface portante (6) supérieure supporte le siège (1), ladite surface portante (6) étant sensiblement dans le plan d'un second niveau de plancher (11) plus élevé que ledit premier niveau de plancher (10), **caractérisé en ce que** ledit siège (1) comprend, de plus, un premier pivot (R1), situé à l'extrémité de l'assise (3) opposée au dossier (4), pour faire pivoter ledit siège (1) dans son ensemble de manière à amener le dos (5) de l'assise sensiblement dans le plan de la surface portante (6) du réhaut (2), et un second pivot (R2), situé sensiblement à l'intersection de l'assise (3) et du dossier (4), pour faire pivoter, simultanément avec la rotation du siège sur ledit premier pivot (R1), ledit dossier (4) par rapport à ladite assise (3) afin d'amener le dos (7) dudit dossier (4) dans un plan sensiblement orthogonal à l'assise (3).

2. Agencement de siège escamotable de véhicule automobile selon la revendication 1, **caractérisé en ce que** le réhaut (2) est monté coulissant sur ledit premier niveau de plancher (10) selon la direction longitudinale du véhicule automobile.

3. Agencement de siège escamotable de véhicule automobile selon la revendication 2, **caractérisé en ce que** le réhaut (2) peut venir en butée contre une planche à talon (8) séparant les deux niveaux de plancher (10, 11), de manière que la surface portante (6) dudit réhaut (2) soit, dans ladite position de butée, coplanaire et contiguë au second niveau de plancher (11).

4. Agencement de siège escamotable de véhicule automobile selon l'une quelconque des revendications 1 à 3, **caractérisé en ce que** l'axe du premier pivot (R1) est situé sensiblement dans le plan de ladite surface portante (6) du réhaut (2) à l'extrémité avant dudit réhaut.

5. Agencement de siège escamotable de véhicule automobile selon l'une quelconque des revendications 1 à 4, **caractérisé en ce que** l'assise (3) présente une épaisseur maximale sensiblement égale à la différence de niveau (H) entre les deux niveaux de plancher (10, 11) dans au moins une partie proche du second pivot (R2).

6. Agencement de siège escamotable de véhicule automobile selon l'une quelconque des revendications 1 à 5, **caractérisé en ce qu'**il est prévu un moyen de blocage du mouvement de rotation du dossier (4) autour de l'axe du second pivot (R2), pour immobiliser le dossier en position telle que le dos (7) dudit dossier (4) soit, dans la position résultante de l'escamotage, dans un plan sensiblement orthogonal à ladite surface portante (6) du réhaut (2).

7. Agencement de siège escamotable de véhicule automobile selon l'une quelconque des revendications 1 à 6, **caractérisé en ce que** la surface de la planche à talon (8), contre laquelle vient en butée le réhaut (2), est située dans un plan qui fait un angle (α) avec les niveaux de plancher compris entre 45° et 90°.

8. Agencement de siège escamotable de véhicule automobile selon l'une quelconque des revendications 1 à 7, **caractérisé en ce que** le réhaut (2) est monté coulissant sur le premier niveau de plancher (10) au moyen de glissières fixées sur ledit premier niveau de plancher (10).

9. Agencement de siège escamotable de véhicule automobile qui comporte une rangée de sièges située en arrière du siège conducteur, **caractérisé en ce que** chaque siège de ladite rangée est un siège escamotable selon l'une quelconque des revendications 1 à 8.

10. Agencement de siège escamotable de véhicule automobile selon la revendication 9, **caractérisé en ce que** ladite rangée de sièges est une rangée de sièges de deuxième rang du véhicule automobile.

11. Agencement de siège escamotable de véhicule automobile selon la revendication 9, **caractérisé en ce que** ladite rangée de sièges est une rangée de sièges arrière du véhicule automobile.

12. Agencement de siège escamotable de véhicule automobile, **caractérisé en ce que** ledit siège est un siège passager de premier rang selon l'une quelconque des revendications 1 à 8.

13. Agencement de siège escamotable de véhicule automobile selon l'une quelconque des revendications 1 à 8, **caractérisé en ce que** ledit siège escamotable est une banquette d'au moins deuxième rang dans le véhicule automobile.
